# EUROPÄISCHE PATENTSCHRIFT

(11) **EP 2 705 198 B1**
(45) Veröffentlichungstag und Bekanntmachung des Hinweises auf die Patenterteilung: **24.08.2016**
(21) Anmeldenummer: 12725338.3
(22) Anmeldetag: 07.05.2012
(51) Int. Cl.: E04B 1/78, E04B 1/94, B32B 5/06, B32B 5/18, B32B 7/08, B32B 27/32, B32B 7/04

(54) **WÄRMEDÄMMSTOFFMATTE, INSBESONDERE FÜR DEN GEBÄUDEBAU, SOWIE VERFAHREN ZU DEREN HERSTELLUNG**
HEAT ISOLATION MAT, NOTABLY FOR THE CONSTRUCTION OF BUILDINGS, AND PROCESS FOR ITS MANUFACTURE
MAT THERMIQUEMENT ISOLANT, NOTAMMENT POUR LA CONSTRUCTION DES BÂTIMENTS, ET PROCÉDÉ POUR SA PRODUCTION.

(30) Priorität: 05.05.2011 DE 102011075374
(43) Veröffentlichungstag der Anmeldung: 12.03.2014
(73) Patentinhaber: J. Finck GmbH & Co. KG, 47803 Krefeld (DE)
(72) Erfinder: ROMBOLOTTO, Oscar Riccardo, 40668 Meerbusch (DE)
(74) Vertreter: DR. STARK & PARTNER
(86) Internationale Anmeldenummer: PCT/EP2012/058401
(87) Internationale Veröffentlichungsnummer: WO 2012/150357

(56) Entgegenhaltungen:
- EP-A1- 1 715 111
- DE-A1- 2 161 497
- DE-A1- 10 001 778
- DE-A1- 10 101 966
- "DIN EN ISO 11925-2:2002 Prüfungen zum Brandverhalten von Bauprodukten, Teil 2: Entzündbarkeit bei direkter Flammeinwirkung" In: "DIN EN ISO 11925-2:2002 Prüfungen zum Brandverhalten von Bauprodukten, Teil 2: Entzündbarkeit bei direkter Flammeinwirkung", 1. Juli 2002 (2002-07-01), DIN Deutsches Institut für Normung e.V., XP55031928, in der Anmeldung erwähnt das ganze Dokument

## Beschreibung

Die vorliegende Erfindung betrifft eine Wärmedämmstoffmatte, insbesondere für den Gebäudebau, die aus übereinander angeordneten Lagen gebildet ist, die mittels wenigstens einer in Längs- (Y) und/oder Querrichtung (X) der Matte ausgeführten Naht, bei der wenigstens ein Faden durch die Lagen geführt ist, zusammengehalten sind; sowie ein Verfahren zur Herstellung solcher Wärmedämmstoffmatten.

Es sind bereits vielfältige Dämmstoffmatten bekannt, die insbesondere als Verbund aus mehreren, übereinander angeordneten Lagen verschiedener Materialien gebildet sind.

Beispielsweise offenbart die DE 101 01 966 B4 ein Wärmedämmungs- und/oder Schallschutzmaterial für den Gebäudebau, welches als Verbundmaterial mit übereinander angeordneten Lagen ausgebildet ist, wobei das Verbundmaterial wenigstens eine metallisierte Lage, wenigstens eine Polyolefin-Lage und wenigstens eine Luftkissenlage aufweist, wobei wenigstens eine Polyolefin-Lage als Polyethylen-Folie hoher Dichte und wenigstens eine Polyolefin-Lage als geschäumte Polyethylen-Folie ausgebildet ist, nachdem festgestellt wurde, dass geschäumte Polyethylen-Folie im Verbund mit metallisierter Folie, Polyethylen-Folie hoher Dichte und/oder Luftkissenfolien sehr gute Wärmedämmungseigenschaften aufweisen.

Um die Lagen handhaben zu können ist bekannt, diese, insbesondere in ihren Randbereichen, mittels Nähens und/oder Schweißens und/oder Tackems, miteinander zu verbinden.

Die DE 100 01 778 A1 offenbart ein Verbundsystem, umfassend eine oder mehrere Platten aus offenzelligen, flexiblen und gute Schallisoliereigenschaften aufweisende Schaumstoffplatten auf Basis von Melamin-/Formaldehyd-Harzen und eine oder mehrere Schichten aus Faservlies oder Fasergewebe, wobei die Platen und Schichten mechanisch durch Vernähen, Versteppen, Tackern, Nadeln oder Vernieten verbunden sind.

Aus der DE 42 42 261 A1 ist ein Verfahren zur Beschichtung von Kunststoff schaumplatten mit Mörtel oder dergleichen, insbesondere für Wandbauplatten als Fliesenträger, bekannt, wobei zur Verbesserung der mechanischen Festigkeit ein Gewebe in der Mörtelschicht vorgesehen ist, das auf die Kunststoffschaumplatte aufgenäht wird oder aber das Gewebe durch Vernähen der Kunststoffschaumplatte entsteht.

Die DE 600 26 541 T2 offenbart ein Verfahren zur Erzeugung einer Beschichtung für ein Isolationsmaterial, wobei eine Kunststoffschicht, die ein Polyamid umfasst, auf einer Oberfläche einer Metallschicht auf eine solche Weise extrudiert wird, dass die Kunststoffschicht und die Metallschicht miteinander verbunden werden, und wobei nach dem Verbinden der Metallschicht und der Kunststoffschicht die Beschichtung auf eine solche Weise auf eine Temperatur zwischen 100 und 160°C erhitzt wird, dass das Polyamid kristallisiert wird.

Aus der DE 21 61 497 A1 ist ein Deckenmaterial mit mindestens einer zusammendrücken, elastischen Schaumstoffschicht, bekannt, wobei in Abständen verteilte Nähte bzw. Stichreihen in das Deckenmaterial eingebettet sind, um das Deckenmaterial zu verstärken und zu stabilisieren, und wobei mindestens eine Fläche des Deckenmaterials aus an der Schaumstoffschicht befestigten ungewebten Textilfasern besteht.

Aus der DE 1 778 733 U ist eine Platte für Boden- oder Wandbelag bekannt, bei welcher Streifen aus Filz durch Zickzacknähte miteinander vereinigt sind, wobei mit Zick-Zack-Nähten bekanntlich Muster aus kurzen Strecken, die in immer gleichen Winkeln aneinandergereiht sind, bezeichnet werden, und wobei die so mittels Zick-Zack-Naht vereinigten Streifen aus Filz zusammen auf einer als Rutschsicherung wirkenden Unterlage, z.B. aus Schaumstoff, unverschieblich befestigt sind.

Schließlich sei noch auf die EP 1 715 111 A1 hingewiesen, welche ein Wärmedämmmittel offenbart, das aus zwei mit Abstand voneinander, parallel zueinander angeordneten dampfdiffusionsoffenen Folien, die wasserdicht, winddicht und infrarotreflektierend ausgestattet sind, sowie einem zwischen den Folien angeordneten Abstandhalter, besteht.

Im Rahmen der Zulassungsprüfungen haben gattungsgemäße Matten nach Prüfnorm DIN EN ISO 11925-2:2011-02 ("Prüfungen zum Brandverhalten - Entzündbarkeit von Produkten bei direkter Flammeneinwirkung - Teil 2: Einzelflammentest") verschiedene Brenntests zu bestehen, bei welchen die Matten und deren Verbindungsmittel einer definierten lokalen Beflammung (sog. Normflammen) ausgesetzt werden.

Um den geltenden Brandschutzbestimmungen zu genügen ist bekannt, wenigstens eine der Lagen oder sämtliche Lagen flammhemmend auszubilden, wobei die hierzu konkret einsetzbaren Verfahren wie die Auf- bzw. Einbringung entsprechender flammhemmender Chemikalien auf die jeweiligen Folien an sich bekannt sind und hier daher nicht im Einzelnen erläutert werden brauchen.

Zum Schutz eines Einreißens der metallisierten äußeren Lagen während des Einbaus gattungsgemäßer Matten beispielsweise in den Dachstuhl eines Gebäudes greift die DE 101 01 966 B4 auf den Einsatz verhältnismäßig dicker Außenlagen mit einer Dicke zwischen 0,03 mm und 0,2 mm zurück, weil bekannte Alternativen wie sehr dünne metallisierte Außenfolien mit einer Dicke von beispielsweise nur 0,012 mm durch das Aufkleben eines Textilgitters zu verstärken angestrebten Brand-Zertifizierungen regelmäßig zuwider laufen, da Klebstoffe gewöhnlich brandbeschleunigend wirken. Problematisch hieran verbleibt, dass Matten mit metallisierten Außenfolien einer Dicke größer 0,03 mm unter der Hitze einer Normflamme gewöhnlich nicht zusammen schmelzen sondern kontinuierlich Hitze in die Matte einleiten, welche bei Erreichung des niedrigsten Flammpunktes eines der verwendeten Materiales zu brennen beginnt.

Hiervon ausgehend liegt der vorliegenden Erfindung die Aufgabe zugrunde, eine gegenüber dem Stand der Technik verbesserte Wärmedämmstoffmatte bereitzustellen, welche insbesondere die vorstehenden Nachteile vermeidend und gleichsam den geforderten Brandschutzbestimmungen genügt.

Diese Aufgabe wird durch eine Wärmedämmstoffmatte, insbesondere für den Gebäudebau, gemäß den Merkmalen des unabhängigen Patentanspruchs 1 sowie durch ein Verfahren zur Herstellung von Wärmedämmstoffmatten gemäß den Merkmalen des Patentanspruchs 14 gelöst. Vorteilhafte Aus- und Weiterbildungen, welche einzeln oder in Kombination miteinander eingesetzt werden können, sind Gegenstand der abhängigen Ansprüche.

Gegenüber gattungsgemäßen Wärmedämmstoffmatte zeichnet sich die erfindungsgemäße Wärmedämmstoffmatte zunächst insbesondere durch lose übereinander angeordneten Lagen aus, welche aus ausschließlich unter der Hitze einer Normflamme eines normierten Brenntests in sich zusammen schmelzenden Dämmmaterialien bestehen, wobei besagte Normflamme mit dem in DIN EN ISO 11925-2:2011-02 angegebenen Prüfverfahren übereinstimmt.

Es wurde nämlich festgestellt, dass bei ausschließlichem Rückgriff auf in sich zusammen schmelzenden Dämmmaterialien die Normflamme schlichtweg ein Loch in die Matte brennt, wodurch ein kontinuierliches Einleiten von Hitze in die Matte und damit einhergehendes Entzünden der Matte bei Erreichung des niedrigsten Flammpunktes vorteilhaft vermieden ist.

Allerdings hat sich bei einer derartigen Testkonfiguration gezeigt, dass bei an den Randbereichen ausgerichteter oder anderweitig geradlinig verlaufender Nähte, bei welchen wenigstens ein Faden durch die Lagen geführt ist, dieser wie ein Docht die Entflammung der Dämmstoffmatte fördern kann, so dass die angestrebte Zertifizierung "normal entflammbar" ("B2" nach DIN 4102-1 bzw. "E" nach europ. Klasse DIN EN 13501-1) zu versagen war.

Gegenüber gattungsgemäßen Wärmedämmstoffmatten zeichnen sich erfindungsgemäße Wärmedämmstoffmatten daher zusätzlich durch wenigstens eine in Längs- (Y) und/oder Querrichtung (X) der Matte wellenförmig ausgeführte Naht aus, wobei die Wellenform der Naht dergestalt bemessen ist, dass sie bezüglich der lokalen Fläche der Normflamme stetig ihre Lage ändernd aus der lokalen Flächenbeflammung herauswandert.

Die wellenförmige Ausgestaltung einer Naht hat also zum Vorteil, dass diese nicht - wie gradlinige Nähte - in der lokalen Fläche eine Normflamme verbleibt oder - wie Zick-Zack-Nähte - darin zurückspringen, sondern diesbezüglich stets ihre Lage ändert und aus der lokalen Flächenbeflammung herauswandert, womit eine Dochtwirkung des Nahtfadens und Entzündung der verwendeten Dämmmaterialien vermieden ist, welche im zulässigen Rahmen in sich zusammenschmelzen.

Je nach Breite der Matte, welche an die vorgesehene Verwendung und/oder Einbauräumlichkeiten angepasst ausgebildet sein kann und beispielsweise 120 cm für private Anwender oder 150 cm für gewerbliche Anwender beträgt, haben sich Matten bewährt, bei welchen insbesondere wenigstens zwei, vorzugsweise drei und maximal fünf wellenförmig ausgeführte Nähte durch die Lagen geführt sein können, wobei insbesondere benachbart einer jeden Querkante der Matte, vorzugsweise in einem Abstand von 20 mm zur Querkante, eine wellenförmig ausgeführte Außennaht und/oder mittig zu den Querkanten der Matte eine wellenförmig ausgeführte Mittennaht und/oder zwischen den Querkanten der Matte und der Mattenmitte je eine wellenförmig ausgeführte Innennaht durch die Lagen geführt sein kann.

Eine unerwünschte Dochtwirkung der Nahtfäden wird weiter vermieden, wenn der Abstand zwischen zwei wellenförmigen Nähten mindestens 90 mm beträgt. Durch die Einhaltung eines Mindestabstandes können sich zudem vorteilhaft Luftschichten zwischen den einzelnen von den Nähten zusammen gehaltenen Lagen bilden. Durch die Bildung von Luftschichten zwischen den einzelnen Lagen ist ein Aufblähen zwischen den wellenförmigen Nähten möglich, womit in Praxis vorteilhaft eine signifikante Erhöhung des ansonsten nur rechnerisch in Ansatz zu bringenden Wärmedurchlasswiderstandes der Matte einhergeht.

Eine unerwünschte Dochtwirkung der Nahtfäden wird des Weiteren vermieden, wenn bei einer Rapportlänge (y) von beispielsweise 150 mm, welche durch den Abstand zweier aufeinander folgender Maxima oder Minima der Welle definiert ist, der Wellenausschlag (x), welcher auch Spitz-Tal-Wert genannt und durch den Abstand zwischen Maximum und Minimum definiert ist, wenigstens 40 mm, vorzugsweise 50 mm, beträgt.

Der Ausbildung von Luftschichten zwischen den einzelnen Lagen förderlich ist, wenn bei einer Wellenlänge von beispielsweise 180 mm (also der tatsächlichen Weglänge einer Welle) vorzugsweise nicht mehr als 36 Nahtstiche durch die Lagen geführt sind, so dass sich eine bevorzugte Stichlänge von 5 mm für eine jede wellenförmige Naht ergibt, bei welcher die aufeinander liegenden Lagen gleichermaßen noch hinreichend luftdurchlässig wie zusammen gehalten sind.

Erfindungsgemäß bevorzugt sind zwischen zwei Nähten wenigstens eine, insbesondere zwei, vorzugsweise vier, Reihen an Perforierungslöchern durch die Lagen geführt, wobei der Verlauf einer jeden Reihe Perforierungslöcher eine vorzugsweise zu den Nähten korrespondierende Wellenform aufweist. Die Perforierungslöcher gewährleisten eine Diffusionsoffenheit der Matte und deren vorteilhafte Verwendung in einem außen vor einer Dampfsperre liegenden Bereich bei ansonsten gleichem Aufbau.

Alternativ oder kumulativ hierzu hat sich zur Vermeidung eines Feuchtigkeitsstaus der Einsatz von Fäden mit Kapillarwirkeigenschaften bewährt.

Beansprucht ist auch ein Verfahren zur Herstellung von, insbesondere erfindungsgemäßen, Wärmedämmstoffmatten unter Rückgriff auf eine Vielnadelnähmaschine.

Erfindungsgemäß bevorzugt können Nähte und/oder die Reihen an Perforierungslöchern mittels Nadeln einer Vielnadelnähmaschine, vorzugsweise im gleichen Arbeitsgang, ausgeführt sein, was die preiswerte Herstellung erfindungsgemäßer Matten gestattet. Dabei können bei der diffusionsoffenen Variante der Matte zusätzliche Nadeln ohne Faden in die Nähmaschine eingesetzt werden, welche die zusätzlichen Löcher durch die Lagen im gleichen Arbeitstakt mit den Nähten einbringen.

Die hohe Wärmedämmwirkung erfindungsgemäßer Dämmstoffmatten wird dadurch erreicht, dass Hitze und Kälte an metallisierten, beispielsweise mit Aluminium und/oder Bronze bedampften und folglich silber- und/oder goldfarbenspiegelnden, Außenlagen aus Polyesterfolie reflektiert werden, welche vorzugsweise flammhemmend, beispielsweise mittels einer LDPE-Beschichtung (abgeleitet von "low density polyethylene"), ausgeführt ist. Alternativ kann als Außenfolie auch eine Verbundfolie aus Aluminium und Polypropylen Verwendung finden. Damit die metallisierten Außenlagen oder Verbundfolien der Matte unter der Hitze einer Normflamme in sich zusammen schmelzen weisen diese eine bevorzugte Dicke von beispielsweise lediglich 0,012 mm auf. Zum Schutz gegen Einreißen bei Montage ist erfindungsgemäß bevorzugt eine Verstärkung der Polyester- oder Verbundfolie mittels eines Gewebedruckverfahrens vorgesehen. Dies vermeidet vorteilhaft den Rückgriff auf brandbeschleunigende Kleber und gewährleistet dennoch eine hinreichende Stabilität der Außenlagen der Matte beim Einbau.

Je nach Bedarf und Einsatzort können nun zwischen den Außenlagen mehrere Innenlagen angeordnet sein, wobei bevorzugt ist, wenn wenigstens eine Innenlage der Matte ein flammhemmend ausgerüstetes Polyestervlies; und/oder ein Weichschaumstoff aus Polyethylen; und/oder eine beidseitig metallisierte, beispielsweise mit Aluminium und/oder Bronze bedampfte, Polyesterfolie ist, wobei letztere sich vorzugsweise zumindest bei Lagerung über 48 Stunden bei 70 °C und 50 % relativer Luftfeuchte irreversibel in Dickenrichtung (Z) der Matte wellt und vorteilhaft die Bildung von Luftschichten zwischen den einzelnen Lagen und folglich das Aufblähen zwischen den wellenförmigen Nähten unterstützt.

Um die Matte sowohl links- wie auch rechtsseitig verlegen zu können hat sich ein Mattenaufbau bewährt, bei welchem die Lagen der Matte von außen nach innen symmetrisch aufgebaut sind.

Da das ausschlaggebende Merkmal der Wärmedämmeigenschaften bei der vorliegenden Wärmedämmstoffmatte deren Reflexionswirkung und nicht die Materialstärke ist, hat sich eine Matte aus insbesondere vierzehn Lagen bewährt, welche von außen nach innen folgenden Aufbau aufweist: eine erste Lage, eine zweite Lage, eine dritte Lage, zwei vierte Lagen, eine dritte Lage, zwei vierte Lagen, eine dritte Lage, zwei vierte Lagen, eine dritte Lage, eine zweite Lage und eine erste Lage.

Damit erfindungsgemäße Wärmedämmstoffmatten gleichermaßen problemlos von privaten wie gewerblichen Anwendern gehandhabt werden können hat sich schließlich bewährt, die Materialien und Dicken der Lagen so zusammenzustellen, dass die Dämmstoffmatte eine Lieferdicke von wenigstens 7 mm, vorzugsweise von durchschnittlich 11 mm und von höchstens 20 mm, sowie ein Gesamtflächengewicht von wenigstens 436 g/m2 +/- 10 % aufweist.

Die erfindungsgemäße Wärmedämmstoffmatte eignet sich zur Isolierung statischer Objekte wie Dächer, Wände/Fassaden oder Böden ebenso wie für die Auskleidung beispielsweise von Fahrerkabinen, Wohnwägen und anderweitiger Fortbewegungsmittel.

Zusätzliche Einzelheiten und weitere Vorteile der Erfindung werden nachfolgend an Hand eines bevorzugten Ausführungsbeispiels einer mehrlagigen Wärmedämmstoffmatte, auf dessen dargestellte Ausgestaltung die vorliegende Erfindung jedoch nicht beschränkt ist, und in Verbindung mit der beigefügten Zeichnung beschrieben.

Es zeigen schematisch:
- Fig. 1: zeigt eine mehrlagige Wärmedämmstoffmatte nach der Erfindung, abgerollt in einer perspektivischen Ansicht;
- Fig. 2: zeigt einen, vorzugsweise vierzehn Lagen umfassenden, schicht-förmigen Aufbau einer Matte gemäß Fig. 1; und
- Fig. 3: zeigt einen Ausschnitt der Matte gemäß Fig. 1 nach einem Brand-test.

Bei der nachfolgenden Beschreibung einer bevorzugten Ausführungsform der vorliegenden Erfindung bezeichnen gleiche Bezugszeichen gleiche oder vergleichbare Komponenten.

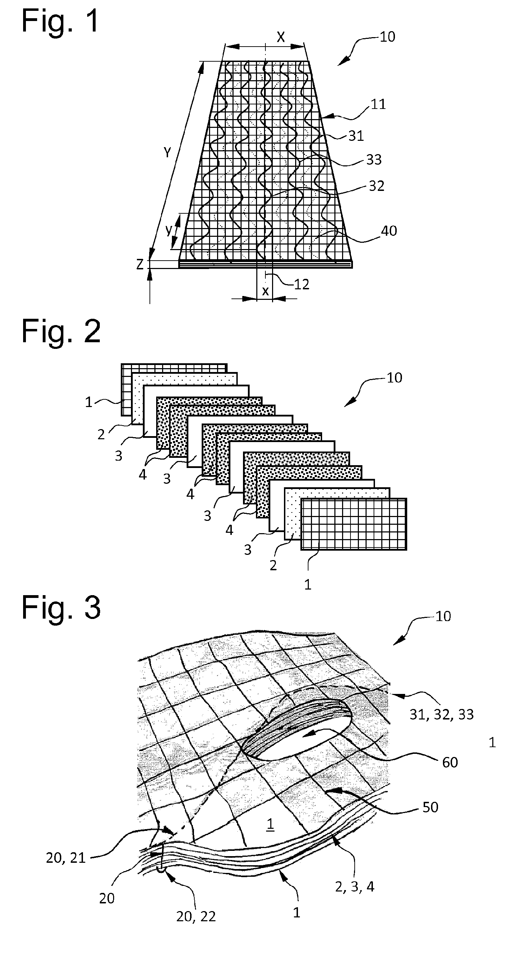

Fig. 1 zeigt eine mehrlagige Wärmedämmstoffmatte 10 nach der Erfindung. Die dargestellte Wärmedämmstoffmatte 10 besteht beispielsweise aus vierzehn lose übereinander angeordneten Lagen 1, 2, 3, 4 ... aus insbesondere Folien, Vliesen und Weichschaumstoff. Die Wärmedämmstoffmatte 10 kann von außen nach innen wie in nachstehender Tabelle ersichtlich aufgebaut sein:
außen

| Lage Nr. | Material | Schichtfolge | Dicke [mm] | Flächengewicht [g/m2\| |
|---|---|---|---|---|
| 1 | 1 | Aluminium bedampfte Polyesterfolie, LDPE beschichtet, flammhemmend ausgerüstet, gewebeverstärkt; oder Verbundfolie aus Aluminium und Polypropylen, gewebeverstärkt | ca. 0,012 | ca. 60 |
| 2 | 2 | Flammhemmend ausgerüstetes Polyestervlies | ca. 0,7 | ca. 70 |
| 3 | 3 | Beidseitig metallisierte, vorzugsweise Aluminium und/oder Bronze bedampfte, Polyesterfolie | ca. 0,012 | ca. 20 |
| 4 | 4 | Polyethylen Weichschaumstoff | ca. 1 | ca. 27 |
| 5 | 4 | Polyethylen Weichschaumstoff | ca. 1 | ca. 27 |
| 6 | 3 | Beidseitig metallisierte, vorzugsweise Aluminium und/oder Bronze bedampfte, Polyesterfolie | ca. 0,012 | ca. 20 |
| 7 | 4 | Polyethylen Weichschaumstoff | ca. 1 | ca. 27 |
| 8 | 4 | Polyethylen Weichschaumstoff | ca. 1 | ca. 27 |
| 9 | 3 | Beidseitig metallisierte, vorzugsweise Aluminium und/oder Bronze bedampfte, Polyesterfolie | ca. 0,012 | ca. 20 |
| 10 | 4 | Polyethylen Weichschaumstoff | ca. 1 | ca. 27 |
| 11 | 4 | Polyethylen Weichschaumstoff | ca. 1 | ca. 27 |
| 12 | 3 | Beidseitig metallisierte, vorzugsweise Aluminium und/oder Bronze bedampfte, Polyesterfolie | ca. 0,012 | ca. 20 |
| 13 | 2 | Flammhemmend ausgerüstetes Polyestervlies | ca. 0,7 | ca. 70 |
| 14 | 1 | Aluminium bedampfte Polyesterfolie, LDPE beschichtet, flammhemmend ausgerüstet, gewebeverstärkt; oder Verbundfolie aus Aluminium und Polypropylen, gewebeverstärkt | ca. 0,012 | ca. 60 |

innen

Um die Lagen 1, 2, 3, 4 ... zueinander zu fixieren sind diese an beiden Querrändern bzw. Querkanten 11 der Matte 10 mit einer wellenförmigen Außennaht 31 sowie in der Mattenmitte 12 mit einer wellenförmigen Mittennaht 32, insbesondere mittels einer Vielnadelsteppmaschine (nicht dargestellt), vernäht. Wie dargestellt kann zwischen den Außennähten 32 und der Mittennaht 32 noch eine Innennaht 33 vorgesehen sein.

Fig. 2 zeigt den, vorzugsweise vierzehn Lagen 1, 2, 3, 4 umfassenden, symmetrischen Schichtaufbau einer Matte gemäß vorstehender Tabelle. Nachvollziehbar ist, wie bei einer irreversiblen Wellung der inneren, beidseitig metallisierten, beispielsweise mit Aluminium und/oder Bronze bedampften, Polyesterfolien 3, diese insbesondere den Weichschaumstoff 4 anzuheben vermögen und ein den Wärmedurchlasswiderstand R vorteilhaft erhöhendes Aufblähen beziehungsweise die Bildung von Luftschichten zwischen den einzelnen Lagen 2, 3, 4 ermöglichen.

Fig. 3 zeigt einen Ausschnitt der Matte 10 gemäß Fig. 1 nach einem Brandtest. Erkennbar zunächst ist, wie die wellenförmige, etwa einer Sinuskurve gleichende, Ausgestaltung einer jeden Naht 31, 32 oder 33 nicht in der lokalen Fläche eine Normflamme - welche in Fig. 3 ein Loch 60 in die Matte brannte - verbleibt, sondern diesbezüglich, vornehmlich tangential, stets ihre Lage ändert und so aus der lokalen Flächenbeflammung herauswandert, dass eine Dochtwirkung der Nahtfäden 20, 21 und/oder 22 und Entzündung der verwendeten Materialien vermieden ist. Das brandschutztechnisch vorteilhafte Herauswandern ist bei einer Rapportlänge (y) von beispielsweise etwa 150 mm insbesondere dann gewährleistet, wenn der Wellenausschlag (x) wenigstens etwa 40 mm, vorzugsweise etwa 50 mm, beträgt oder das Verhältnis zwischen Rapportlänge (y) und Wellenausschlag (x) einer jeden wellenförmig ausgebildeten Naht etwa 1 : 3,75 oder vorzugsweise etwa 1 : 3,0 beträgt.

Die erfindungsgemäße Wärmedämmstoffmatte 10 eignet sich insbesondere zur Isolierung von Dächern, Wänden/Fassaden oder Böden, was nachfolgend beschrieben wird:
Ein Wärmeverlust, der durch Wind oder breite Luftbewegungen hervorgerufen wird (Konvektion genannt) kann durch die Trennung eines Innenraums von einem Außenraum erreicht werden (Luft- und Winddichtigkeit). Gleiches gilt für das Eindringen von Wasser. Diese Trennung ist dadurch erreichbar, das erfindungsgemäße Wärmedämmstoffmatten 10 an ihren Schnittstellen, gewöhnlich den Querkanten 11, mindestens 50 mm überlappend verlegt werden. Bei einem Steildach mit geringer Dachneigung unter 20° sollte eine Überlappung bis 80 mm erfolgen. Die Verlegetemperatur sollte mindestens bei 10°C liegen, bei einer maximalen relativen Luftfeuchtigkeit von 65 %. Die erfindungsgemäße Wärmedämmstoffmatte 10 kann somit sowohl als Unterdeckbahn (Unterspannbahn) zur Herstellung der Winddichtheit als auch zur Herstellung der Luftdichtheit als Luftdichtigkeitsfolie eingesetzt werden.

Die - vorzugsweise bahnförmigen - Wärmedämmstoffmatten 10 werden anschließend mittels eines Aluminium- oder Bronze-Klebebandes miteinander auf der Schnitt- und Seitenstelle mittig verbunden. Dabei werden die Außennähte 31 mit abgedichtet. Sobald auch die Mittelnaht 32 und etwaige Innennähte 33 mit einem Klebeband abgedichtet sind, erhält man eine diffusionsgeschlossene Oberfläche, die in ihrer Wirkung vorteilhaft mit einer Dampfsperre vergleichbar ist, was z.B. unter dem Sparren eines Dachstuhls gewollt ist, um das Eindringen von Feuchtigkeit von innen (z.B. Feuchträumen) in die Dachkonstruktion zu vermeiden.

In einer alternativen Ausgestaltung erfindungsgemäßer Wärmedämmstoffmatten 10 sind zusätzlich zu den Nähten Reihen an Perforierungslöcher 40 vorgesehen, welche aufgrund der damit einhergehenden Diffusionsoffenheit den Einsatz ansonsten baugleicher Wärmedämmstoffmatten 10 auch oberhalb der Sparren gestattet. Bei dieser Variante brauchen freilich die Mittennaht 32 und etwaige Innennähte 33 nicht abgeklebt zu werden.

Aufgrund des geringen Emissionsgrades und damit verbunden dem hohen Reflektionsgrades der Oberfläche der Wärmedämmstoffmatte im infraroten Spektrum wird der Wärmetransportmechanismus innerhalb der angrenzenden Luftschichten fast vollständig eliminiert. Die Wärmeübertragung findet praktisch nur noch über Wärmeleitung und Konvektion statt. Hieraus ergibt sich je nach Einbausituation und Luftschichtdicke eine äquivalente Wärmeleitfähigkeit. Auf diese Weise können konstruktiv ohnehin erforderliche Luftschichten und Installationsebenen als wärmetechnisch relevante Schichten genutzt werden. Wird die erfindungsgemäße Wärmedämmstoffmatte 10 nach innen oder außen sichtbar oder in belüfteten Luftschichten eingesetzt, so erhöht sich der innere bzw. äußere Wärmeübergangswiderstand, so dass die Wärmedämmwirkung zusätzlich erhöht wird.

Aufgrund der wesentlich größeren Abhängigkeit der Konvektion gegenüber nichtreflektierenden Dämmstoffen ergeben sich je nach Wärmestromrichtung unterschiedliche Wärmedämmwerte. So ist der sommerliche Wärmeschutz bei einem Flachdach nochmals erheblich höher als im Winter.

Die - vorzugsweise bahnförmigen - Wärmedämmstoffmatten 10 sollten auf der Befestigungsoberfläche (meist Latten) ca. alle 80 mm mit mindestens 20 mm tiefen Klammern oder Dachpappnägeln befestigt werden. An Nagel- bzw. Tackerstellen ist ein Nagelband zu verwenden. Alle Flächen, die eine Wärmeverlustzone bilden, sollten möglichst mit erfindungsgemäßen Matten 10 ummantelt werden.

Die erfindungsgemäße Wärmedämmstoffmatte 10, welche also in Verbindung mit abgeklebten Nähten als nahezu diffusionsdicht anzusehen ist, wird durch eine entsprechende Mikroperforation diffusionsfähig. Durch die Anzahl und Größe der Mikroporen kann das Wasserdampfdiffusionsverhalten so gestaltet werden, dass die Matte 10 diffusionsoffen eingesetzt werden kann.

Die erfindungsgemäße Wärmedämmstoffmatte 10 kann somit zur Wärmedämmung in Dächern, Wänden/Fassaden, Böden und Geschoßdecken oder auch in Fahrerkabinen, Wohnwagen, Containern, Kühlhäusern, technischen Einrichtungen etc. eingesetzt werden und dabei umgebende Luftschichten als zusätzlich wirksame Wärmedämmung nutzbar machen.

Auf Grund des mehrschichtigen Aufbaus und der gewählten Materialien ergibt sich zusätzlich eine sehr gute Abschirmwirkung gegenüber Hochfrequenzstrahlung. Durch eine Erdung der Matten 10 kann auch eine Abschirmung im niederfrequenten Bereich erzielt werden.

### Bezugszeichenliste

- 1: erste Lage, Außenlagen, insbesondere: eine mittels eines Gewebedruckverfahrens verstärkte, metallisierte Polyesterfolie
- 2: zweite Lage, Innenlage, insbesondere: flammhemmend ausgerüstetes Polyestervlies
- 3: dritte Lage, Innenlage, insbesondere: beidseitig mit Aluminium und/oder Bronze bedampfte Polyesterfolie
- 4: vierte Lage, Innenlage, insbesondere: Weichschaumstoff aus Polyethylen
- 10: Wärmedämmstoffmatte
- 11: Querkanten der Matte 10
- 12: Mattenmitte
- 20: Faden
- 21: Obergarn
- 22: Untergarn
- 31: Außennaht
- 32: Mittennaht
- 33: Innennaht
- 40: Reihe Perforierungslöcher
- 50: mittels Druckverfahren aufgebrachte Gewebeverstärkung
- 60: Brandloch aufgrund Normflamme
- X: Querrichtung der Matte 10
- Y: Längsrichtung der Matte 10
- Z: Dickenrichtung der Matte 10

- y: Rapportlänge der Nähte 31, 32, 33 bzw. einer Reihe Perforierungslöcher 40
- x: Wellenausschlag der Nähte 31, 32, 33 bzw. einer Reihe Perforierungslöcher 40

## Patentansprüche

1. Wärmedämmstoffmatte (10), insbesondere für den Gebäudebau, die aus lose übereinander angeordneten Lagen (1, 2, 3, 4 ...)
- aus ausschließlich unter der Hitze einer Normflamme eines gemäß DIN EN ISO 11925-2 normierten Brenntests in sich so zusammen schmelzenden Dämmmaterialien gebildet ist, dass die Normflamme schlichtweg ein Loch in der Matte (10) brennt, so dass ein kontinuierliches Einleiten von Hitze in die Matte (10) und damit einhergehendes Entzünden der Matte (10) bei Erreichung des niedrigsten Flammpunktes vermieden ist,
- und die mittels wenigstens einer in Längs- (X) und/oder Querrichtung (Y) der Matte (10) wellenförmig ausgeführten Naht (31, 32, 33), bei der wenigstens ein Faden (20, 21, 22) durch die Lagen (1, 2, 3, 4 ...) geführt ist, zusammengehalten sind,
wobei die Wellenform der Naht (31, 32, 33) dergestalt bemessen ist, dass sie bezüglich der lokalen Fläche der Normflamme stetig ihre Lage ändernd aus der lokalen Flächenbeflammung so herauswandert, dass der Faden (20, 21, 22) der Naht (31, 32, 33) nicht wie ein Docht wirken und die Entzündung der Matte (10) fördern kann.

2. Wärmedämmstoffmatte (10) nach Anspruch 1, **dadurch gekennzeichnet, dass** wenigstens zwei (31, 31), vorzugsweise drei (31, 32, 31) und maximal fünf (31, 33, 32, 23, 31) wellenförmig ausgeführte Nähte durch die Lagen (1, 2, 3, 4 ...) geführt sind, wobei insbesondere
- benachbart einer jeden Querkante (11) der Matte (10), vorzugsweise in einem Abstand von 20 mm zur Querkante (11), eine Außennaht (31) und/oder
- mittig zwischen den Querkanten (11) der Matte (10) eine wellenförmig ausgeführte Mittennaht (32) und/oder
- zwischen den Querkanten (11) der Matte (10) und der Mattenmitte (12) je eine wellenförmig ausgeführte Innennaht (33)
durch die Lagen (1, 2, 3, 4 ...) geführt ist.

3. Wärmedämmstoffmatte (10) nach Anspruch 1 oder 2, **dadurch gekennzeichnet, dass** der Abstand zwischen zwei wellenförmigen Nähten (31, 32, 33) mindestens 90 mm beträgt.

4. Wärmedämmstoffmatte (10) nach einem der Ansprüche 1 bis 3, **dadurch gekennzeichnet, dass** bei einer Rapportlänge (y) von beispielsweise 150 mm der Wellenausschlag (x) einer jeden wellenförmig ausgeführten Naht (31, 32, 33) wenigstens 40 mm, vorzugsweise 50 mm, beträgt.

5. Wärmedämmstoffmatte (10) nach einem der vorherigen Ansprüche, **dadurch gekennzeichnet, dass** bei einer Wellenlänge von beispielsweise 180 mm nicht mehr als 36 Nahtstiche durch die Lagen (1, 2, 3, 4 ...) geführt sind, so dass sich eine bevorzugte Stichlänge von 5 mm für eine jede wellenförmige Naht (31, 32, 33) ergibt.

6. Wärmedämmstoffmatte (10) nach einem der vorherigen Ansprüche, **dadurch gekennzeichnet, dass** zwischen zwei Nähten (31, 32, 33) wenigstens eine, insbesondere zwei, vorzugsweise vier, Reihen an Perforierungslöchern (40) durch die Lagen (1, 2, 3, 4 ...) geführt sind, wobei der Verlauf einer jeden Reihe Perforierungslöcher (40) eine vorzugsweise zu den Nähten (31, 32, 33) korrespondierende Wellenform aufweist.

7. Wärmedämmstoffmatte (10) nach einem der vorherigen Ansprüche, **dadurch gekennzeichnet, dass** die Fäden (20, 21, 22), mit welchen die Lagen (1, 2, 3, 4 ...) zusammen haltenden werden, Kapillarwirkeigenschaften aufweisen.

8. Wärmedämmstoffmatte (10) nach einem der vorherigen Ansprüche, **dadurch gekennzeichnet, dass** die Nähte (31, 32, 33) und/oder die Reihen an Perforierungslöchern (40) mittels Nadeln einer Vielnadelnähmaschine, vorzugsweise im gleichen Arbeitsgang, ausgeführt sind.

9. Wärmedämmstoffmatte (10) nach einem der vorherigen Ansprüche, **dadurch gekennzeichnet, dass** die Außenlagen (1) der Matte (10) eine mittels eines Gewebedruckverfahrens verstärkte, metallisierte Polyesterfolie (1) ist.

10. Wärmedämmstoffmatte (10) nach einem der vorherigen Ansprüche, **dadurch gekennzeichnet, dass** wenigstens eine Innenlage (2, 3, 4 ...) der Matte (10)
- ein flammhemmend ausgerüstetes Polyestervlies (2); und/oder
- eine beidseitig mit Aluminium und/oder Bronze bedampfte Polyesterfolie (3) ist, welche sich zumindest bei Lagerung über 48 Stunden bei 70 °C und 50 % relativer Luftfeuchte irreversibel in Dickenrichtung (Z) der Matte (10) wellt; und/oder
- ein Weichschaumstoff (4) aus Polyethylen;
ist.

11. Wärmedämmstoffmatte (10) nach einem der vorherigen Ansprüche, **dadurch gekennzeichnet, dass** die Lagen (1, 2, 3, 4, 4, 3, 4, 4, 3, 4, 4, 3, 2, 1) der Matte (10) von außen nach innen symmetrisch aufgebaut sind.

12. Wärmedämmstoffmatte (10) nach einem der vorherigen Ansprüche, **dadurch gekennzeichnet, dass** die Matte (10) vierzehn Lagen (1, 2, 3, 4 ...) umfasst, welche von außen nach innen folgenden Aufbau aufweist: eine erste Lage (1), eine zweite Lage (2), eine dritte Lage (3), zwei vierte Lagen (4), eine dritte Lage (3), zwei vierte Lagen (4), eine dritte Lage (3), zwei vierte Lagen (4), eine dritte Lage (3), eine zweite Lage (2) und eine erste Lage (1).

13. Wärmedämmstoffmatte (10) nach einem der vorherigen Ansprüche, **dadurch gekennzeichnet, dass** Materialien und Dicken der Lagen (1, 2, 3, 4 ...) so zusammengestellt sind, dass die Matte (10) eine Mindestdicke von wenigstens 7 mm, vorzugsweise von durchschnittlich 11 mm und von höchstens 20 mm, sowie ein Gesamtflächengewicht von wenigstens 436 g/m2 +/- 10 % aufweist.

14. Verfahren zur Herstellung einer Wärmedämmstoffmatte (10), insbesondere nach einem der vorherigen Ansprüche, in einer Vielnadelnähmaschine.

15. Verfahren nach Anspruch 14, bei dem die Nähte (31, 32, 33) und/oder die Reihen an Perforierungslöchern (40) mittels Nadeln einer Vielnadelnähmaschine, vorzugsweise im gleichen Arbeitsgang, ausgeführt sind, wobei im Fall der Herstellung der diffusionsoffenen Variante der Matte (10) zusätzliche Nadeln ohne Faden in die Nähmaschine eingesetzt sind, welche die zusätzlichen Löcher (40) durch die Lagen (1, 2, 3, 4 ...) im gleichen Arbeitsgang mit den Nähten (31, 32, 33) einbringen.

## Claims

1. Heat-insulating material mat (10), in particular for use in building construction, which is formed from layers (1, 2, 3, 4) which are laid loosely above one another
- formed from insulating materials which fuse together exclusively under the heat of a standard flame of a fire test conducted in accordance with DN EN ISO 11925-2, such that the standard flame simply burns a hole in the mat (10) and therefore a continuous introduction of heat into the mat (10) is avoided, and therefore also the consequent igniting of the mat (10) on reaching the lowest flash,
- and which are held together by means of at least one seam (31, 32, 33), configured in undulating form in the longitudinal (X) and/or transverse (Y) direction of the mat, whereby at least one thread (20, 21, 22) is guided through the layers (1, 2, 3, 4 ...),
wherein the undulating form of the seam (31, 32, 33) is dimensioned such that, constantly changing in position in relation to the local surface area of the standard flame, it moves out of the local flame-treatment surface area in such a way that the thread (20, 21, 22) of the seam (31, 32, 33) does not have the effect of a wick, and cannot encourage the igniting of the mat (10).

2. Heat-insulating material mat (10) according to claim 1, **characterised in that** at least two (31, 31), preferably three (31, 32, 31) and a maximum of five (31, 33, 32, 23, 31) seams in undulating configuration are guided through the layers (1, 2, 3, 4 ...), wherein, in particular, guided through the layers (1, 2, 3, 4 ...)
- adjacent to each transverse edge (11) of the mat (10), preferably at a distance spacing of 20 mm to the transverse edge (11), is an outer seam (31) and/or
- centrally between the transverse edges (11) of the mat (10) is a middle seam (32), configured as undulating, and/or
- between the transverse edges (11) of the mat (10) and the mat middle (12) is an inner seam (33), configured as undulating.

3. Heat-insulating material mat (10) according to claim 1 or 2, **characterised in that** the distance spacing between two undulating seams (31, 32, 33) is at least 90 mm.

4. Heat-insulating material mat (10) according to any one of claims 1 to 3, **characterised in that**, with a length of repeat (y) of, for example, 150 mm, the undulation deflection (x) of each seam (31, 32, 33) configured as undulating is at least 40 mm, and preferably 50 mm.

5. Heat-insulating material mat (10) according to any one of the preceding claims, **characterised in that**, with an undulation length of, for example, 180 mm, not more than 36 seam stitches are introduced through the layers (1, 2, 3, 4 ...), such that a preferred stitch length of 5 mm is derived for each undulating seam (31, 32, 33).

6. Heat-insulating material mat (10) according to any one of the preceding claims, **characterised in that**, between two seams (31, 32, 33) at least one row, in particular two rows, and preferably four rows of perforation holes (40) are introduced through the layers (1, 2, 3, 4 ...), wherein the course of each row of perforation holes (40) preferably exhibits an undulating form corresponding to the seams (31, 32, 33).

7. Heat-insulating material mat (10) according to any one of the preceding claims, **characterised in that** the threads (20, 21, 22), with which the layers (1,2,3,4 ...) are held together, exhibit capillary effect properties.

8. Heat-insulating material mat (10) according to any one of the preceding claims, **characterised in that** the seams (31, 32, 33) and/or the rows of perforation holes (4) are applied by means of needles of a multi-needle sewing machine, preferably in the same work cycle.

9. Heat-insulating material mat (10) according to any one of the preceding claims, **characterised in that** on the outer layers (1) of the mat (10) is a metallised polyester film (1) reinforced by means of a fabric printing process.

10. Heat-insulating material mat (10) according to any one of the preceding claims, **characterised in that** at least one inner layer (2, 3, 4 ...) of the mat (10) is
- a polyester nonwoven fleece (2) configured as flame-retardant; and/or
- a polyester film (3) vapour-deposited on both sides with aluminium and/or bronze, which, under storage for at least for 48 hours at 70 °C and 50% relative air humidity, undulates irreversibly in the thickness direction (Z) of the mat (10); and/or
- a soft foam substance (4) of polyethylene.

11. Heat-insulating material mat (10) according to any one of the preceding claims, **characterised in that** the layers (1,2,3,4,4,3,4,4,3,4,4,3,2,1) of the mat (10) are built up symmetrically from the outside inwards.

12. Heat-insulating material mat (10) according to any one of the preceding claims, **characterised in that** the mat (10) comprises fourteen layers (1, 2, 3, 4 ...), which exhibit the following structure from the outside inwards: One first layer (1), one second layer (2), one third layer (3), two fourth layers (4), one third layer (3), two fourth layers (4), one third layer (3), one second layer (2), and one first layer (1).

13. Heat-insulating material mat (10) according to any one of the preceding claims, **characterised in that** materials and thicknesses of the layers (1,2,3,4 ...) are assembled in such a way that the mat (10) exhibits a minimum thickness of at least 7 mm, preferably an average of 11 mm, and a maximum of 20 mm, as well as a total mass per unit area of at least 436 g/m² +/- 10%.

14. Method for producing a heat-insulating mat (10), in particular according to any one of the preceding claims, on a multi-needle sewing machine.

15. Method according to claim 14, with which the seams (31, 32, 33) and/or the rows of perforation holes (40) are introduced by means of needles of a multi-needle sewing machine, preferably in the same work cycle, wherein, in the case of the production of the diffusion-open variant of the mat (10), additional needles without threads are inserted into the sewing machine, which then introduce the additional holes (40) through the layers (1,2,3,4 ...) in the same work cycle with the seams (31, 32, 33).

## Revendications

1. Natte en matériau calorifuge (10), en particulier pour la construction de bâtiments, qui est formée de couches (1, 2, 3, 4 ...) superposées de manière lâche,
- ladite natte étant composée de matériaux isolants fondant uniquement sous la chaleur d'une flamme normalisée d'un test de combustion conforme à la norme DIN EN ISO 11925-2 de telle façon que la flamme normalisée crée simplement un trou dans la natte (10), de sorte qu'une introduction continue de chaleur dans la natte (10) et par conséquent une inflammation de la natte (10) soit évitée à l'atteinte du point d'inflammation le plus bas,
- et lesquelles couches étant maintenues ensemble au moyen d'au moins une couture (31, 32, 33) de forme ondulée dans la direction longitudinale (X) et/ou transversale (Y) de la natte (10), dans laquelle au moins un fil (20, 21, 22) est passé à travers les couches (1, 2, 3, 4 ...),
la forme ondulée de la couture (31, 32, 33) étant calculée de façon qu'elle s'écarte de la surface locale exposée à la flamme en modifiant constamment sa position par rapport à la surface locale de la flamme normalisée, de telle sorte que le fil (20, 21, 22) de la couture (31, 32, 33) ne puisse pas agir comme une mèche et favoriser l'inflammation de la natte (10).

2. Natte en matériau calorifuge (10) selon la revendication 1, **caractérisée en ce qu'**au moins deux (31, 31), de préférence trois (31, 32, 31) et au maximum cinq (31, 33, 32, 23, 31) coutures de forme ondulée sont passées à travers les couches (1, 2, 3, 4 ...), en particulier
- une couture extérieure (31) étant passée au voisinage de chaque bord transversal (11) de la natte (10), de préférence à une distance d'environ 20 mm du bord transversal (11), et/ou
- une couture centrale (32) de forme ondulée étant passée au milieu entre les bords transversaux (11) de la natte (10) et/ou
- une couture intérieure (33) de forme ondulée étant passée chaque fois entre les bords transversaux (11) de la natte (10) et le milieu de la natte (12)
à travers les couches (1, 2, 3, 4 ...).

3. Natte en matériau calorifuge (10) selon la revendication 1 ou 2, **caractérisée en ce que** la distance entre deux coutures ondulées (31, 32, 33) est d'au moins 90 mm.

4. Natte en matériau calorifuge (10) selon l'une des revendications 1 à 3, **caractérisée en ce que** pour une longueur de rapport (y) de 150 mm, par exemple, l'amplitude de l'onde (x) de chaque couture de forme ondulée (31, 32, 33) est d'au moins 40 mm, de préférence 50 mm.

5. Natte en matériau calorifuge (10) selon l'une des revendications précédentes, **caractérisée en ce que** pour une longueur d'onde de 180 mm, par exemple, pas plus de 36 points de couture sont passés à travers les couches (1, 2, 3, 4 ...), de sorte qu'il en résulte une longueur de point préférée de 5 mm pour chaque couture ondulée (31, 32, 33).

6. Natte en matériau calorifuge (10) selon l'une des revendications précédentes, **caractérisée en ce qu'**entre deux coutures (31, 32, 33) au moins une, en particulier deux, de préférence quatre rangées de trous de perforation (40) sont passées à travers les couches (1, 2, 3, 4 ...), le tracé de chaque rangée de trous de perforation (40) présentant une forme ondulée correspondant de préférence aux coutures (31, 32,33).

7. Natte en matériau calorifuge (10) selon l'une des revendications précédentes, **caractérisée en ce que** les fils (20, 21, 22) avec lesquels les couches (1, 2, 3, 4 ...) sont maintenues ensemble présentent des propriétés capillaires.

8. Natte en matériau calorifuge (10) selon l'une des revendications précédentes, **caractérisée en ce que** les coutures (31, 32, 33) et/ou les rangées de trous de perforation (40) sont réalisées au moyen d'aiguilles d'une machine à coudre à aiguilles multiples, de préférence en une seule opération.

9. Natte en matériau calorifuge (10) selon l'une des revendications précédentes, **caractérisée en ce que** les couches extérieures (1) de la natte (10) sont des films en polyester métallisé (1) renforcés par un procédé d'impression sur textile.

10. Natte en matériau calorifuge (10) selon l'une des revendications précédentes, **caractérisée en ce qu'**au moins une couche intérieure (2, 3, 4 ...) de la natte (10) est
- un non-tissé en polyester ignifugé (2) ; et/ou
- un film en polyester (3) vaporisé à l'aluminium et/ou au bronze des deux côtés, qui se gondole de manière irréversible dans la direction de l'épaisseur (Z) de la natte (10) au moins en cas de stockage pendant 48 heures à 70 °C et 50 % d'humidité relative de l'air ; et/ou
- une mousse souple (4) en polyéthylène.

11. Natte en matériau calorifuge (10) selon l'une des revendications précédentes, **caractérisée en ce que** les couches (1, 2, 3, 4, 4, 3, 4, 4, 3, 4, 4, 3, 2, 1) de la natte (10) présentent une structure symétrique de l'extérieur vers l'intérieur.

12. Natte en matériau calorifuge (10) selon l'une des revendications précédentes, **caractérisée en ce que** la natte (10) comprend quatorze couches (1, 2, 3, 4 ...) qui présentent la structure suivante de l'extérieur vers l'intérieur : une première couche (1), une deuxième couche (2), une troisième couche (3), deux quatrièmes couches (4), une troisième couche (3), deux quatrièmes couches (4), une troisième couche (3), deux quatrièmes couches (4), une troisième couche (3), une deuxième couche (2) et une première couche (1).

13. Natte en matériau calorifuge (10) selon l'une des revendications précédentes, **caractérisée en ce que** les matériaux et épaisseurs des couches (1, 2, 3, 4 ...) sont choisis de façon que la natte (10) présente une épaisseur minimale d'au moins 7 mm, de préférence de 11 mm en moyenne et de 20 mm au maximum, ainsi qu'un poids surfacique total d'au moins 436 g/m2 +/- 10 %.

14. Procédé de fabrication d'une natte en matériau calorifuge (10), en particulier selon l'une des revendications précédentes, dans une machine à coudre à aiguilles multiples.

15. Procédé selon la revendication 14, selon lequel les coutures (31, 32, 33) et/ou les rangées de trous de perforation (40) sont réalisées au moyen d'aiguilles d'une machine à coudre à aiguilles multiples, de préférence en une seule opération, des aiguilles supplémentaires sans fil étant insérées dans la machine à coudre, lesquelles réalisent les trous supplémentaires (40) à travers les couches (1, 2, 3, 4...) en une seule opération avec les coutures (31, 32, 33) dans le cas de la fabrication de la variante ouverte à la diffusions de la natte (10).
